# EUROPEAN PATENT APPLICATION

(11) **EP 3 996 222 A1**
(43) Date of publication of application: **11.05.2022**
(21) Application number: 20835435.7
(22) Date of filing: 30.06.2020
(51) Int. Cl.: H02G 3/08

(54) **ASSEMBLED JUNCTION BOX CONNECTING STRUCTURE**

(30) Priority: 01.07.2019 NO NO
(71) Applicant: Ningbo Huiyu Lighting Co., Ltd, Ningbo, Zhejiang 315100 (CN)
(72) Inventor: YTRELAND, Olav Magne, Ningbo, Zhejiang 315100 (CN); ZHOU, Xiling, Ningbo, Zhejiang 315100 (CN)
(74) Representative: Ipey
(86) International application number: PCT/CN2020/099089
(87) International publication number: WO 2021/000845

(57) **Abstract**

The present invention provides a type of connecting structure of assembled junction box, including a junction box body, and a connecting wire tube f the rotary locking structure the rotary locking structure or threading. Through a rotary locking structure, the connecting wire tube as described and the side of the box body of the junction box form a detachable fixed connection. which can make the two connecting parts tightly connected without looseness. Meanwhile, its structure is simple and easy to operate.

## Description

### Technical field

The present invention refers to the technical field of power cord installation junction boxes, especially refers to a type of connecting structure of assembled junction box.

### Background technology

The junction box used for power cord connection is a common and frequently used power connection part for indoor decoration. For specific use, it is necessary to put the power cord on the wire tube, pass it into the junction box through the threading tube, and form a power connection with the switch connected to the side of the junction box. Considering the convenience of transportation and assembly and disassembly, the threading tube, the switch and the junction box are all clamping structure, that is, connect the threading tube, switch or socket with the junction box through a structure such as a buckle. Sometimes it is even necessary to form a connection between the junction box and the other junction box, the clamping structure is also adopted between the two; But in practical application, we find that after adopting this type of connection structure, it is easy to loosen after a long time of use. Therefore, it is necessary to eliminate this defect through technical improvements.

### Content of the Invention

For the above-mentioned problems, the present invention proposes a type of connecting structure of assembled junction box, which can make the two connecting parts tightly connected without looseness. Meanwhile, its structure is simple and easy to operate.

In order to solve the above technical problems, the present invention provides a type of connecting structure of assembled junction box, including a junction box body, and a connecting wire tube f the rotary locking structure the rotary locking structure or threading. Through a rotary locking structure, the connecting wire tube as described and the side of the box body of the junction box form a detachable fixed connection.

Preferably, the rotary locking structure includes: the rotary locking structure The first connecting hole located on the side of the junction box body and interlinking with the inside of the junction box body, and a first connecting piece located at the rear end of the connecting wire tube and integrally connected with the connecting wire tube, the left and right ends of the inner wall of the first connecting hole as described are equipped with convex arc-shaped connecting strips arranged in a symmetrical structure, which are respectively the first convex arc-shaped connecting strip and the second convex arc connecting strip. The transverse cross-sections of the first convex arc connecting strip and the second convex arc-shaped connecting strip as described are L-shaped, so that an open first arc-shaped sliding groove is formed on the outer side of the first convex arc-shaped connecting strip; And form an open second arc-shaped sliding groove on the outside of the second convex arc-shaped connecting strip;

The rear end of the first connecting piece as described is equipped with a first arc-shaped rotating piece and a second arc-shaped rotating piece that can fit the first arc-shaped sliding groove and the second arc-shaped sliding groove to rotate and slide, the transverse cross-sections of the first arc-shaped rotating piece and the second arc-shaped rotating piece as described are both L-shaped structure, and the first arc-shaped rotating piece and the second arc-shaped rotating piece as described are arranged symmetrically, meanwhile, the upper end of the first connecting hole is equipped with an embedded connecting groove, the corresponding position of the upper end of the first connecting piece, equipped with the embedded positioning block for positioning, when the first arc-shaped rotating piece and the second arc-shaped rotating piece rotate to a certain angle along the first arc-shaped sliding groove and the second arc-shaped sliding groove, the embedded connecting groove can be inserted to form.

Further preferably, the number of the embedded connecting grooves as described is two, and the two embedded connecting grooves have the same size and structure.

As the improvement of this present invention, the upper end surface of the junction box body is equipped with a convex ring interlinking with the inside of the junction box body, the convex ring as described is equipped with internal connecting threads, the outer circumferential direction of the connecting ring is equipped with an outer connecting thread which can form a threaded connection with the inner connecting thread, and a dust cover is equipped on the upper end of the connecting ring, a rotary locking structure is equipped between the upper end of the connecting ring and the bottom of the dust cover, so that a detachable fixed connection is formed between the dust cover and the connecting ring. Furthermore, the present invention also includes a positioning piece for positioning and connecting the wooden board, and a second connecting hole located on the side of the junction box body and interlinking with the inside of the junction box body, the rear end of the positioning piece as described is equipped with a second connecting piece which forms a 90-degree angle with the positioning piece and is integrally connected to the positioning piece; a rotary locking structure is equipped between the front end of the second connecting piece and the second connecting hole, so that a detachable fixed connection is formed between the positioning piece and the junction box body.

Further preferably, the number of the connecting wire tubes as described is one, two or more than two, and each connecting wire tube is composed of a pair or more than one pair of wire tubes arranged side by side.

The connecting components on the side of the junction box body of the present invention are connected with the junction box body through a rotary locking structure, and the rotary locking structure is tightly connected, not easy to be loosened, which is convenient to connect and disassemble.

### Description of Attached Figures

Figure 1 shows the installation and connection structure diagram of the cross section of the present invention;
Figure 2 shows the specific structure diagram of the first and second arc-shaped sliding grooves in the first connecting hole of the present invention;
Figure 3 shows the amplification structure diagram of the first and second arc-shaped rotating pieces of the present invention;
Figure 4 shows the appearance structure diagram of the positioning piece and the second connecting piece of the present invention;

Among them, 1. Junction box body; 2. Connecting wire tube; 3. The first connecting hole; 4. The first connecting piece; 5. The first convex arc-shaped connecting strip; 6. The second convex arc-shaped connecting strip; 7. The first arc-shaped sliding groove; 8. The second arc-shaped sliding groove; 9. The first arc-shaped rotating pieces; 10. The second arc-shaped rotating pieces; 11. The embedded connecting groove; 12. The embedded positioning block; 13. Bulge loop; 14. Internal connection thread; 15. Connecting ring; 16. External connection thread 17. Dust cover; 18. Positioning piece; 19. The second connecting hole; 20. The second connecting piece;

### Specific implementation mode

The present invention is further described in details combined with the following attached figures and specific implementation mode.

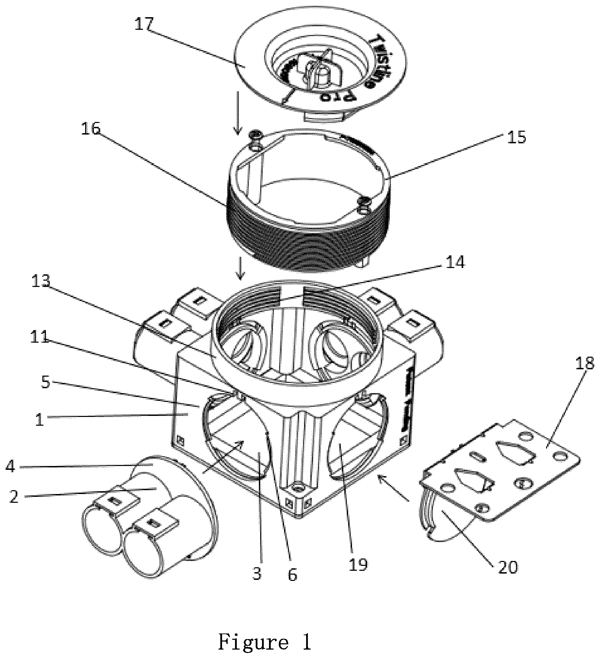

Figure 1 shows that a type of connecting structure of assembled junction box, include a junction box body 1, and a connecting wire tube 2 for threading, in the invention, preferably, the number of connecting wire tube 2 is one, two or more than two, and each connecting wire tube 2 is composed of a pair or more than one pair of wire tubes arranged side by side.

In the present invention, through a rotary locking structure, the side surface of the connecting wire tube 2 and the junction box body 1 form the detachable fixed connection.

In the invention, the preferred rotary locking structure includes: The first connecting hole 3 located on the side of the junction box body 1 and interlinking with the inside of the junction box body 1, and the first connecting piece 4 located at the rear end of the connecting wire tube 2 and integrally connected with the connecting wire tube 2.

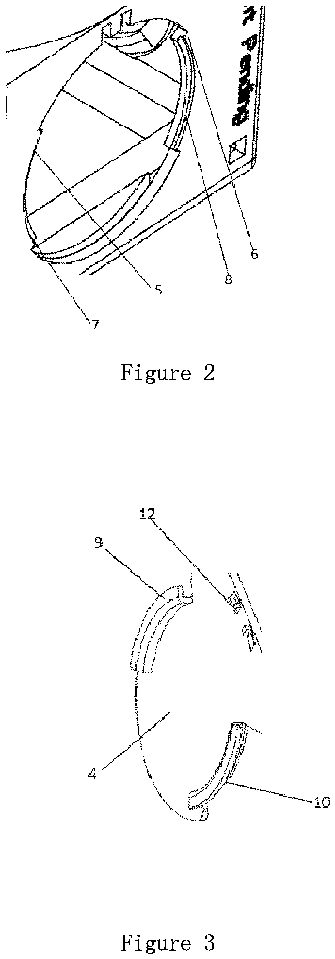

Combined with figure 2 shows that the left and right ends of the inner wall of the first connecting hole 3 are equipped with convex arc-shaped connecting strips arranged in a symmetrical structure, which are respectively the first convex arc-shaped connecting strip 5 and the second convex arc-shaped connecting strip 6. For shape, the transverse cross-sections of the first convex arc-shaped connecting strip 5 and the second convex arc-shaped connecting strip 6 are both L-shaped, so that an open first arc sliding groove 7 is formed on the outer side of the first convex arc-shaped connecting strip 5; And the open second arc-shaped sliding groove 8 is formed on the outer side of the second convex arc-shaped connecting strip 6.

Combined with figure 3 shows that at the rear end of the first connecting piece 4 is equipped with a first arc-shaped rotating piece 9 and a second arc-shaped rotating piece 10 that can fit the first arc-shaped sliding groove 7 and the second arc-shaped sliding groove 8 to rotate and slide. For shape, the transverse cross-sections of the first arc-shaped rotating piece 9 and the second arc-shaped rotating piece 10 are both L-shaped structures, and the first arc-shaped rotating piece 9 and the second arc-shaped rotating piece 10 are symmetrically arranged left and right.

The embedded connecting groove 11 is equipped at the upper end of the first connecting hole 3, at the corresponding position on the upper end of the first connecting piece 4, equipped with the embedded positioning block 12 for positioning, when the first arc-shaped rotating piece 9 and the second arc-shaped rotating piece 10 rotate to a certain angle along the first arc-shaped sliding groove 7 and the second arc-shaped sliding groove 8, the embedded connecting groove 11 can be inserted to form.

In the present invention, preferably, the number of embedded connecting grooves 11 is two, and the two embedded connecting grooves 11 have the same size and structure. Of course, in practical applications, the number of embedded connecting grooves 11 may also be one, and it also belongs to the protection category of the invention.

Continue to look at figure 1, a convex ring 13 interlinking with the inside of the junction box body 1 is equipped on the upper end surface of the junction box body 1. The convex ring 13 is equipped with an internal connecting thread 14 and a connecting ring 15, which is equipped with an external connecting thread 16 that can form a threaded connection with the internal connecting thread 14 in the outer circumferential direction. The upper end of the connecting ring 15 is equipped with a dust cover 17, and a rotary locking structure is equipped between the upper end of the connecting ring 15 and the bottom of the dust cover 17, so that a detachable fixed connection is formed between the dust cover 17 and the connecting ring 15. Due to the rotary locking structure is the same as the rotary locking described above, the description will not be repeated here.

The dust cover 17 is connected with the rotary locking structure, which is convenient for connection and disassembly of the dust cover 17, meanwhile, the dust-proof effect inside the junction box body 1 can be better.

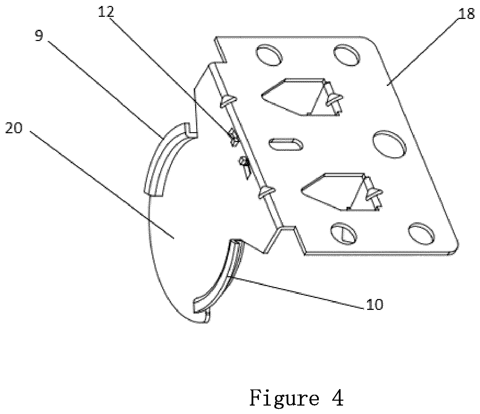

Combined with figure 4 shows that the present invention also includes a positioning piece 18 for positioning and connecting the wooden board, and the second connecting hole 19 located on the side of the junction box body 1 and interlinking with the inside of the junction box body 1. The rear end of the positioning piece 18 is equipped with the second connecting piece 20 that is at a 90-degree angle to the positioning piece 18 and is integrally connected to the positioning piece 18, a rotary locking structure is equipped between the front end of the second connecting piece 20 and the second connecting hole 19, so that a detachable fixed connection is formed between the positioning piece 18 and the junction box body 1. Due to the rotary locking structure is the same as the rotary locking described above, the description will not be repeated here.

In the present invention, the first arc-shaped sliding groove 7 and the first arc-shaped rotating piece 9, and the second arc-shaped sliding groove 8 and the second arc-shaped rotating piece 10, actually look from the transverse section, it is just a pair of open concave-convex connection structures, that is, the concave-convex locking structure and the rotating structure are combined, plus the embedded connection of the embedded connecting groove 11 and the embedded positioning block 12, and finally a rotary locking structure is formed. The rotary locking structure is tightly connected, not easy to be loosened, which is convenient to connect and disassemble.

## Claims

1. A type of connecting structure of assembled junction box, includes a box body of the junction box (1), and a connecting wire tube for threading (2), its characteristic is that a detachable fixed connection is formed between the connecting wire tube (2) and the side surface of the junction box body (1) through a rotary locking structure.

2. The connecting structure of assembled junction box as described in claim 1, its characteristic is that the rotary locking structure as described includes: The first connecting hole (3) located on the side of the junction box body and interlinking with the inside of the junction box body, and a first connecting piece (4) located at the rear end of the connecting wire tube (2) and integrally connected with the connecting wire tube (2), the left and right ends of the inner wall of the first connecting hole (3) as described are equipped with convex arc-shaped connecting strips arranged in a symmetrical structure, which are respectively the first convex arc-shaped connecting strip (5) and the second convex arc connecting strip (6). The transverse cross-sections of the first convex arc-shaped connecting strip (5) and the second convex arc-shaped connecting strip (6) as described are L-shaped, so that an open first arc-shaped sliding groove (7) is formed on the outer side of the first convex arc-shaped connecting strip (5); And the open second arc-shaped sliding groove (8) is formed on the outer side of the second convex arc-shaped connecting strip (6);
the rear end of the first connecting piece (4) as described is equipped with a first arc-shaped rotating piece (7) and a second arc-shaped rotating piece (8) that can fit the first arc-shaped sliding groove (9) and the second arc-shaped sliding groove (10) to rotate and slide, the transverse cross-sections of the first arc-shaped rotating piece (9) and the second arc-shaped rotating piece (10) as described are both L-shaped structure, and the first arc-shaped rotating piece and the second arc-shaped rotating piece as described are arranged symmetrically, meanwhile, the upper end of the first connecting hole (3) is equipped with an embedded connecting groove (11), the corresponding position of the upper end of the first connecting piece (4), equipped with the embedded positioning block (12) for positioning, when the first arc-shaped rotating piece (9) and the second arc-shaped rotating piece (10) rotate to a certain angle along the first arc-shaped sliding groove (7) and the second arc-shaped sliding groove (8), the embedded connecting groove (11) can be inserted to form.

3. The connecting structure of assembled junction box as described in claim 1, its characteristic is that the number of the embedded connecting grooves (11) is two, and the two embedded connecting grooves (11) have the same size and structure.

4. The connecting structure of assembled junction box as described in claim 1, its characteristic is that the convex ring (13) interlinking with the inside of the junction box body (1) is equipped on the upper end surface of the junction box body (1). The convex ring (13) is equipped with the internal connecting thread (14) and the connecting ring (15), which is equipped with the external connecting thread (16) that can form a threaded connection with the internal connecting thread (14) in the outer circumferential direction. The upper end of the connecting ring (15) is equipped with a dust cover (17), and a rotary locking structure as the right-claiming 1 and 2 described is equipped between the upper end of the connecting ring (15) and the bottom of the dust cover (17), so that a detachable fixed connection is formed between the dust cover (17) and the connecting ring (15).

5. The connecting structure of assembled junction box as described in claim 1, its characteristic is that it also includes a positioning piece (18) for positioning and connecting the wooden board, and the second connecting hole (19) located on the side of the junction box body (1) and interlinking with the inside of the junction box body (1). The rear end of the positioning piece (18) is equipped with the second connecting piece (20) that is at a 90-degree angle to the positioning piece (18) and is integrally connected to the positioning piece (18), a rotary locking structure is equipped as the right-claiming 1 and 2 described between the front end of the second connecting piece (20) and the second connecting hole (19), so that a detachable fixed connection is formed between the positioning piece (18) and the junction box body (1);
the connecting structure of assembled junction box as described in right-claiming 1, its characteristic is that the number of the connecting wire tubes (2) as described is one, two or more than two, and each connecting wire tube (2) is composed of a pair or more than one pair of wire tubes arranged side by side.
